# EUROPEAN PATENT APPLICATION

(11) **EP 2 962 840 A1**
(43) Date of publication of application: **06.01.2016**
(21) Application number: 14382251.8
(22) Date of filing: 30.06.2014
(51) Int. Cl.: B29D 99/00, B29C 70/30, B64C 3/28

(54) **A leading edge for an aircraft lifting surface and manufacturing method thereof**

(71) Applicant: Airbus Operations, S.L., 28906 Getafe (Madrid) (ES)
(72) Inventor: Garcia Nieto, Carlos, 28906 GETAFE (Madrid) (ES); Guinaldo Fernandez, Enrique, 28906 GETAFE (Madrid) (ES); Vélez de Mendizábal Alonso, Iker, 28906 GETAFE (Madrid) (ES); Ramos Garcia, Luis, 28906 GETAFE (Madrid) (ES)
(74) Representative: Carpintero Lopez, Francisco

(57) **Abstract**

The present invention refers to a method for manufacturing a leading edge (1) of an aircraft lifting surface, the leading edge having a leading edge skin (2) and a supporting structure (3) including at least two spars span-wise arranged and fixed internally to the leading edge skin. In the method of the invention, the supporting structure (3) is obtained from a single laminate (4) of plies of composite material, which is conformed in such a manner that in a cross-sectional view of the same, the laminate includes a trapezoidal configuration which forms a front spar (5) and a rear spar (6) of the supporting structure. The invention also refers to a leading edge obtained by the above-described method. Since the supporting structure of the leading edge is obtained from a single component, namely the laminate (4), the manufacturing method is simplified and production costs are significantly reduced.

## Description

### Object of the invention

The present invention refers to an architecture and manufacturing method of a leading edge for an aircraft lifting or supporting surfaces, such as wings and stabilizers.

One object of the present invention is to provide a method for manufacturing such a leading edge in a simple manner and with a reduced number of components, simplifying thereby the assembly operations and reducing manufacturing costs.

Additionally, it is also an object of the present invention to provide an optimized structure for a leading edge of an aircraft, in order to reduce its weight and to reduce thereby fuel consumption.

### Background of the invention

Aircraft lifting surfaces such as wings, Horizontal Tail Planes (HTP), Vertical Tail Planes (VTP), etc., are formed by skin panels reinforced internally by a supporting structure, which typically comprises longitudinal front and rear spars, transverse ribs joining the spars, and stringers between the ribs and skin panels.

On the leading edge of a wing, that is, on the front edge of the wing as seen in the direction of flight, there is one or more leading edge sections longitudinally arranged to form the outermost surface of the wing. The leading edge is coupled with the torsion box of the wing and comprises its own skin panel and support structure.

Known leading edge designs comprise skin panels internally stiffened by several leading edge ribs. In the case of large commercial aircraft, two additional metallic spars are used, wherein one of them is vertically arranged next to the foremost point or nose of the leading edge, and the other one is diagonally arranged in a cross-sectional view of the leading edge.

In this multi-spar architecture, each element of the supporting structure has to be manufactured separately, assembled and joined individually to the internal surface of the leading edge skin, for example in the case of a supporting structure formed by two spars, four interface areas are created, two for each spar. This process is complex and time consuming.

There is therefore the need for leading edge structures which are lighter and which can be constructed with a reduced number of components in order to simplify their manufacture and reduce productions costs.

### Summary of the invention

The present invention is defined in the attached independent claims, and refers to a leading edge of an aircraft wing or stabilizer and its manufacturing method. The leading edge comprises a skin panel which has an essentially C-shaped cross-section or some other similar aerodynamic shape with a closed front edge or nose, and an open tail edge, as seen in the flight direction.

A complete leading edge is typically formed by several leading edge sections, arranged span-wise one after the other to form together the aerodynamic surface of the leading edge.

An aspect of the invention refers to a method for manufacturing a leading edge of an aircraft lifting surface, which comprises the steps of manufacturing at least one leading edge section using a composite material, said leading edge section having a leading edge skin and a supporting structure including at least two spars span-wise arranged and fixed internally to the leading edge skin.

According to the invention, the supporting structure is obtained from a single laminate of uncured plies, which is conformed or shaped by properly folding some parts of it along folding lines, in such a manner that in a cross-sectional view, the laminate configuration includes a trapezoidal shape. Such trapezoidal shape forms a front spar and a rear spar for the supporting structure.

The technical effect and advantage of obtaining the supporting structure from a single laminate of composite material, is that, the different elements of the supporting structure, spars mainly, are integral parts of the same body (the conformed laminate), therefore instead of manufacturing separate spars and assembling them individually to the leading edge skin, in the present invention the spars are part of the same body which is manufactured in the same manufacturing operation, transported as a single piece, and assembled with the leading edge simultaneously in the same operation.

The laminate is initially formed as a substantially flat laminate by laying up a plurality of plies on a flat surface by means of any known laminating technique, and then the laminate is conformed on a male mold by applying heat and pressing the laminate against the male mold. The male mold has the desired shape for the laminate, such as the laminate after being conformed has: a front spar, a rear spar, an upper flange joining the front and rear spar. The trapezoidal shape mentioned before, is defined by the front and rear spar and the upper flange. The conformed spar also has a front spar foot and a rear spar foot.

The supporting structure and the leading edge skin are assembled together, such as the upper flange is in contact, that is, joined with an upper internal surface of the leading edge skin, whereas the feet of the front and the rear spar are joined with a lower internal surface of the leading edge skin. Since only these three interface areas are needed to join the leading edge skin and its supporting structure, the manufacturing method is greatly simplified and the lead time is reduced.

Several alternatives are foreseen for structurally joining the leading edge skin and its supporting structure, namely: these two parts can be co-cured, co-bonded, or both assembled in a cured state and joined by fastening means, such as rivets.

Another aspect of the invention refers to a leading edge of an aircraft lifting surface obtained with the above-described manufacturing method. The leading edge of the invention comprises at least one leading edge section made of a composite material, said leading edge section comprising a leading edge skin and a supporting structure including at least two spars span-wise arranged and fixed internally to the leading edge skin.

The leading edge is characterized in that the supporting structure is a laminate of plies of composite material, conformed or shaped in such a manner that in a cross-sectional view of the same, the laminate configuration includes a trapezoidal shape which forms a front spar, a rear spar, and an upper flange joining the front and rear spar, such as the supporting structure is fixed to the leading edge skin through the upper flange.

Preferably, the conformed laminate further includes a front spar foot and a rear spar foot, and the supporting structure is additionally fixed to the leading edge skin through the front spar foot and a rear spar foot. In contrast with the prior art where each spar is individually fixed to the leading edge skin, such as at least four interface areas are created, in the present invention only three interface areas are needed to join the leading edge skin and its supporting structure.

An additional advantage derived from the laminate conformed with a trapezoidal configuration, is that the inclination of the spars and their position within the leading edge skin,correspond to the main loads induced by a torsion box in the leading edge structure. The leading edge architecture is thereby optimized in terms of structural behavior, for that, less number of spars are required thus reducing the weight of the leading edge. Furthermore, due to that optimization of the structural behavior, the thickness of the leading edge skin can also be optimized in terms of stiffness and buckling behavior.

### Brief description of the drawings

Preferred embodiments of the invention, are henceforth described with reference to the accompanying drawings, in which:
Figure 1.- shows a cross-sectional view of a leading edge section according to a preferred embodiment of the invention. Dotted lines indicate the location of the rivets in the case of the riveted alternative.
Figure 2.- shows in a top plan view the laminate before its conformation.
Figure 3.- shows a perspective view of a complete leading edge formed in this example by two leading sections similar to the one shown in figure 1.
Figure 4.- shows two perspective views of different stages of the process of manufacturing a supporting structure for a leading edge according to the invention, wherein drawing (A) shows a laminate being conformed on a male mold, and drawing (B) shows the previously conformed laminate resting on a curing male tool for curing the laminate.
Figure 5.- shows two perspective views of different stages of the process of manufacturing a leading edge skin.
Figure 6.- shows two perspective views of a subsequent stage of the process wherein the leading edge skin and the supporting structure are assembled together.
Figure 7.- shows in a perspective view the final stages of the manufacturing method of the invention wherein the supporting structure and the leading edge skin are assembled together. Again, dotted lines indicate the location of the rivets in the case of the riveted alternative of assembly. The leading edge skin is represented as a transparent body so that the position of the supporting structure in its interior can be observed.

### Preferred embodiment of the invention

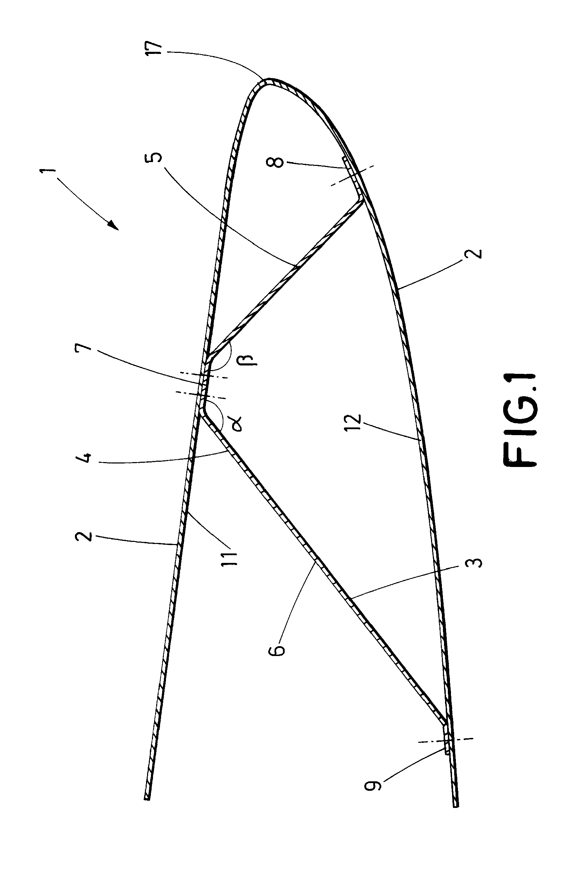

Figure 1 shows a leading edge section (1) according to the invention, which comprises a leading edge skin (2) having a substantially C-shaped cross-sectional configuration, and a supporting structure (3) internally fixed to the leading edge skin.

It can be appreciated in this figure, that according to the invention the supporting structure is a single object or body properly shaped to form the structural elements (spars) of the supporting structure (3). That single body consist of a laminate (4) obtained as a stack of carbon fiber plies.

In particular, that laminate (4) is conformed in such a manner that it forms (in the span-wise direction of the leading edge) a front spar (5), a rear spar (6), and an upper flange (7) joining the front and rear spar (5,6). It can be clearly observed in figure 1 that those three elements (5,6,7) define a trapezoidal configuration, or alternatively it could be defined that the front spar (5) and the rear spar (6) define respectively, with respect to the upper flange (7), angles (α, β) each one of these angles being within the range 90°-170°

Additionally, that relative positions of the spars (5,6) of the supporting structure (3) correspond with the main load paths which appear in a leading edge. In this manner, the same or an even better structural behavior of the leading edge is achieved, but with a reduced number of spars compared with prior art designs and with a design without ribs, therefore a significant weight saving is achieved and the productions cost is reduced by simplifying the manufacturing process

Furthermore, the position and the inclination of the spars increases the strength of the leading edge against bird strike, which is a well-known phenomenon which may occur during the service life of the aircraft. Due to the inclined arrangement of the spars with respect to a horizontal direction of flight, a bird would need to impact against the leading edge with larger speed and energy to break the spars and pass through them, compared with a traditional leading edge architecture.

The inclined arrangement of the spars, also improves the behavior of the joints between the leading edge and a torsion box to which is joined, compared with a traditional leading edge architecture.

The front and rear spars (5,6) and the upper flange (7) are substantially flat and are span-wise arranged in the leading edge and extend substantially the same length as the leading edge section (1).

Additionally, the laminate (4) is additionally conformed to include a front spar foot (8) and a rear spar foot (9), such as these two foots (8,9) and the upper flange (7) forms the only three interface areas with the leading edge skin (2), through which these two parts are joined together. More specifically, the upper flange (7) is in contact with an upper internal surface (11) of the leading edge skin (2), and the feet (8,9) of the front and the rear spars (5,6) are in contact with a lower internal surface (12) of the leading edge skin (2).

The area of the feet (8,9) and the upper flange (7) is dimensioned taking into account the particular technique used for joining the supporting structure and the leading edge skin (co-curing, co-bonding, riveting etc), as well as the shear loads that those interface areas have to withstand for each particular application.

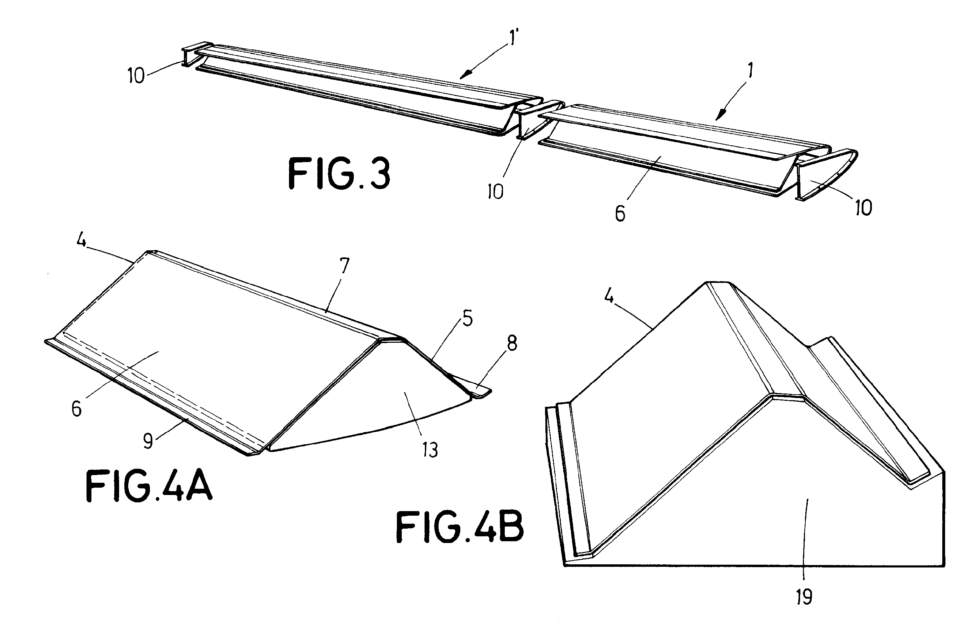

A complete leading edge for example for an aircraft wing, is typically formed by several leading edge sections (1) as the one shown in figure 1. Figure 3 is an example of a leading edge formed by two sections (1,1') with the same configuration shown in figure 1 but with different dimension and geometry. A rib (10) is coupled to each end of the leading edge sections (1,1'), so that the complete leading edge is assembled with a torsion box (not shown) of an aircraft wing trough those ribs (10).

The invention mainly refers to the design and construction of the supporting structure (3), whereas the aerodynamic design of the leading edge skin is basically an existing leading edge design, which means that the invention can be applied to any leading edge topology which is currently being manufactured, without the need of modifying existing leading edge configuration. However, the thickness of the leading edge can be optimized as explained before.

In the method of the invention, the laminate (4) to form the supporting structure (3), is obtained by forming a stack of plies (for example CFRP plies), on a flat surface typically be means of an automated process.

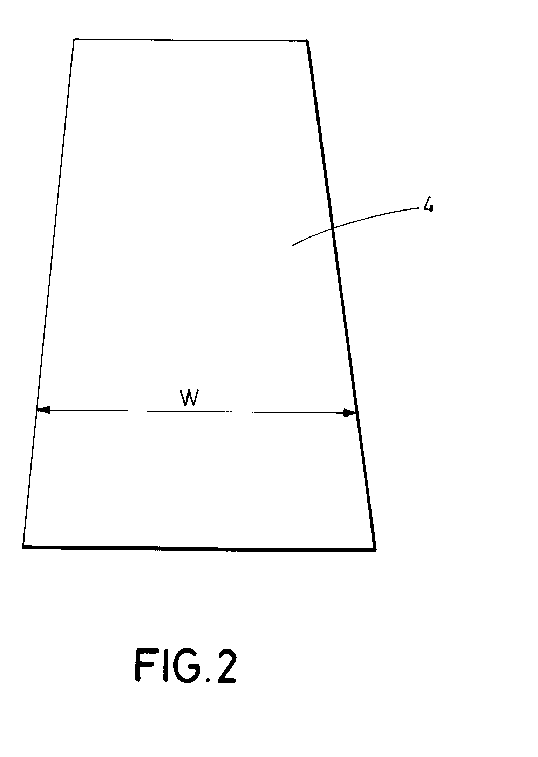

A typical leading edge design reduces its cross-sectional area progressively from root to tip, hence, the geometry of the respective supporting structure has to be adapted to that particularity of the leading edge design. For that, according to the present invention, the laminate (4) is formed such as its width (W) is progressively reduced from one of its ends to the other as shown in figure 2, such as the laminate (4) has a trapezoidal shape in plan view.

In a subsequent stage of the process, the laminate (4) is placed on a male mold (13) provided with a surface with the desired shape for the laminate, and the laminate is conformed by heating and pressing the laminate (4) against the male mold (13). This stage of the process is shown in figure 4A, wherein the laminate is not yet cured for that it is conventionally called perform, which in this case takes the trapezoidal configuration mentioned previously.

It can be observed in figure 4A, how the same laminate once properly conformed defines the front spar (5), the rear spar (6), the upper flange (7) joining the front and rear spar (5,6), the front spar foot (8) and the rear spar foot (9).

Although, it cannot be clearly appreciated in figure 4A, it can be deduced from the above explanations related to figure 2, that the male mold (13) has no constant cross-sectional area, but that area is progressively reduced in correspondence with the shape of the laminate (4) shown in figure 2, such as the cross-sectional area of the conformed laminate (4) progressively decrees from one end of the supporting structure to the other.

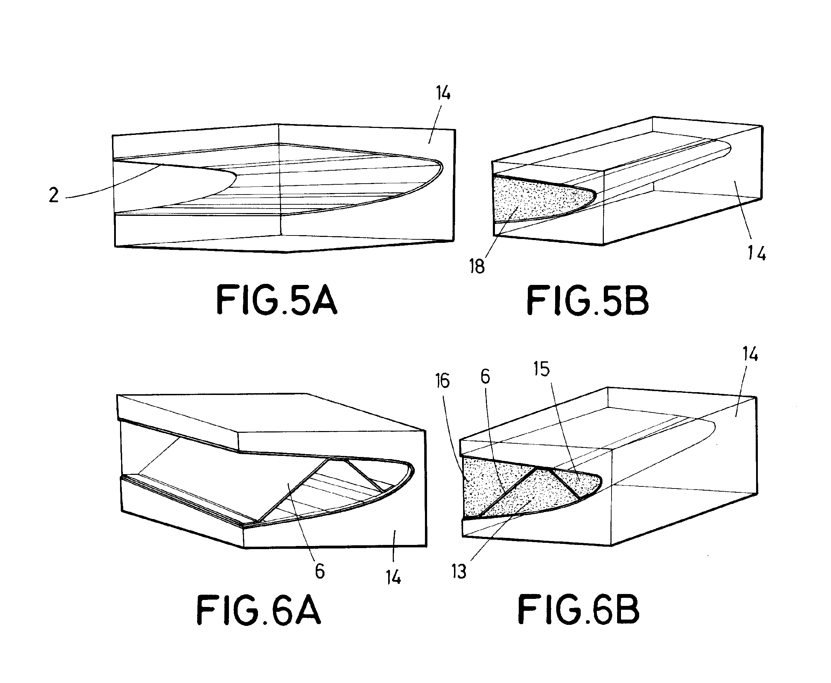

On the other hand, a leading edge skin (2) is conventionally obtained by forming a laminate of CFRP plies on a male tool (18), and then the leading edge skin is transferred to a female tool (14) wherein it is suitable received as shown in figure 5A,B.

As explained before, several alternatives are foreseen for structurally joining the leading edge skin and its supporting structure, namely these two parts can be co-cured, co-bonded, or alternatively both parts are assembled in a cured state by fastening means, such as rivets.

In the co-curing option, the conformed laminate (4) of figure 4A is placed inside the leading edge skin (2) of figure 5 to form the assembly shown in figures 6A,B. The curing tools used for curing the assembly are: the female tool (14), the male mold (13), a front curing tool (15) placed at the bay defined between the front spar (5) and the leading edge nose (17), and a rear curing tool (16) placed to fill the space behind the rear spar (6) as shown in figure 6B. The assembly shown in figure 6B is then cured in an autoclave and de-molded.

In the co-bonding option, either the leading edge skin (2), or the supporting structure (3) is first cured in an autoclave before its assembly with the other part. In the case of curing the leading edge skin (2), this can be carried out in the female tool (14) of figure 5 using the male tool (18) as curing tool filling the space inside the leading edge. In the case of curing the laminate (4), this is transferred from the male mold (13) of figure 4A to the curing tool (19) of figure 4B.

Then, the cured part and the non-cured part are assembled together with the application of adhesive on the interface surfaces between the two parts, forming the assembly shown in figure 6B including the curing tools shown therein, which is then placed inside an autoclave for curing the non-cured part and co-bonding the same with the cured part.

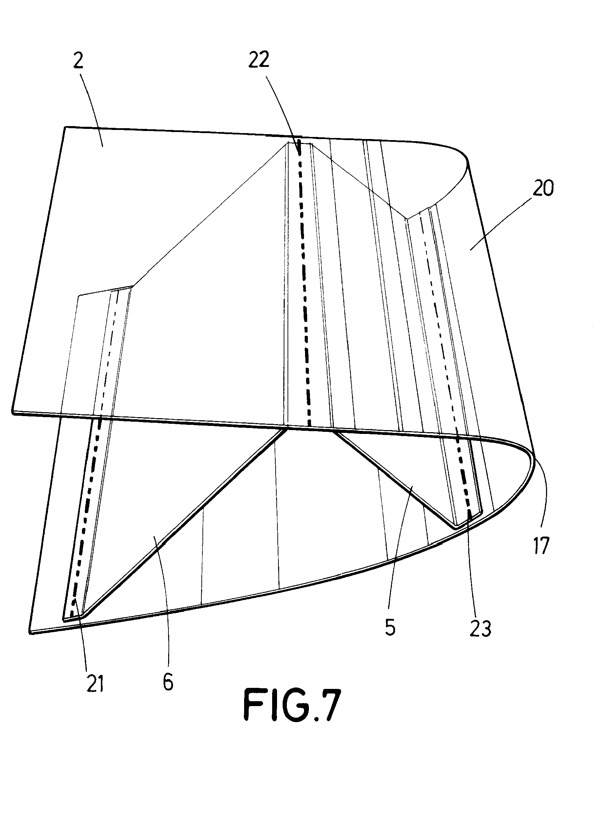

In the riveted option, the leading edge skin (2) and the supporting structure (3) are cured separately as explained before, and then they are assembled and riveted together by the application of rivets along fastening lines (21, 22, 23) running respectively along the upper flange (7), the front spar foot (8) and the rear spar foot (9) as shown in figure 7.

An anti-erosion plate (20) made of aluminum or steel is conventionally fitted to the leading edge nose (17).

Other preferred embodiments of the present invention are described in the appended dependent claims and the multiple combinations of those claims.

## Claims

1. Method for manufacturing a leading edge of an aircraft lifting surface,
comprising the steps of manufacturing at least one leading edge section with a composite material, said leading edge section having a leading edge skin and a supporting structure including at least two spars span-wise arranged and fixed internally to the leading edge skin,
**characterized in that** the supporting structure is obtained by forming a laminate of plies of composite material, and conforming the laminate in such a manner that in a cross-sectional view of the same, the laminate configurations includes a trapezoidal shape, which forms a front spar and a rear spar of the supporting structure.

2. Method according to claim 1 wherein the laminate is initially formed as a substantially flat laminate having a trapezoidal shape in a top plan view, and wherein the laminate is subsequently conformed on a male mold by heating and pressing the laminate against the mold.

3. Method according to claim 1 or 2 wherein the laminate is conformed to form: a front spar, a rear spar, an upper flange joining the front and rear spar, a front spar foot and a rear spar foot.

4. Method according to any of the preceding claims wherein the laminate is conformed such as the cross-sectional area defined by the same, progressively decrees from one end of the supporting structure to the other.

5. Method according to any of the preceding claims further comprising the steps of obtaining the leading edge skin by forming a laminate on a male tool, and assembling together the supporting structure and the leading edge skin, such as the upper flange is in contact with an upper internal surface of the leading edge skin, and the foots of the front and the rear spar are in contact with a lower internal surface of the leading edge skin.

6. Method according to claim 5 wherein both the leading edge skin and the supporting structure are assembled together in an un-cured state, and subsequently both parts are co-cured together.

7. Method according to claim 5 wherein the leading edge skin and the supporting structure are assembled together such as one of these two parts is uncured and the other part is cured, and wherein subsequently both part are co-bonded together.

8. Method according to claim 5 wherein both the leading edge skin and the supporting structure are assembled together in a cured state, and subsequently both part are riveted together.

9. Leading edge of an aircraft lifting surface comprising at least one leading edge section made of a composite material, said leading edge section comprising a leading edge skin and a supporting structure including at least two spars span-wise arranged and fixed internally to the leading edge skin, **characterized in that** the supporting structure is a laminate of plies of composite material, conformed in such a manner that in a cross-sectional view of the same, the laminate includes a trapezoidal configuration comprising a front spar, a rear spar, and an upper flange joining the front and rear spar, and wherein the supporting structure is fixed to the leading edge skin through the upper flange.

10. Leading edge according to claim 1 wherein the laminate further includes a front spar foot and a rear spar foot, and wherein the supporting structure is additionally fixed to the leading edge skin through the front spar foot and a rear spar foot.
